# EUROPÄISCHE PATENTSCHRIFT

(11) **EP 0 720 509 B1**
(45) Veröffentlichungstag und Bekanntmachung des Hinweises auf die Patenterteilung: **07.01.1998**
(21) Anmeldenummer: 94928376.6
(22) Anmeldetag: 17.09.1994
(51) Int. Cl.: B01D 65/02, B01D 61/22, C12G 3/08, C12H 1/06

(54) **VERFAHREN UND VORRICHTUNG ZUR FILTRATION VON FlÜSSIGKEITEN MITTELS MF-MODULEN**
PROCESS AND DEVICE FOR FILTERING FLUIDS BY MEANS OF MF MODULES
PROCEDE ET DISPOSITIF DE FILTRATION DE LIQUIDE A L'AIDE DE MODULES DE MICROFILTRATION

(30) Priorität: 22.09.1993 DE 4332175
(43) Veröffentlichungstag der Anmeldung: 10.07.1996
(73) Patentinhaber: SEITZ-FILTER-WERKE GmbH, 55543 Bad Kreuznach (DE)
(72) Erfinder: STROHM, Gerhard, D-55278 Dexheim (DE); SCHNIEDER, Georg, D-55595 Traisen (DE); HEPP, Wolfgang, D-55232 Alzey (DE); DUCHEK, Paul, D-55595 Gutenberg (DE)
(74) Vertreter: Fuchs Mehler Weiss
(86) Internationale Anmeldenummer: EP9403132
(87) Internationale Veröffentlichungsnummer: WO9508386

(56) Entgegenhaltungen:
- EP-A- 0 076 665
- EP-A- 0 208 450
- DE-A- 4 204 708
- DE-A- 4 227 225
- FR-A- 2 674 448

## Beschreibung

Die Erfindung betrifft ein Verfahren zur Filtration von Flüssigkeiten, insbesondere von heterodispersen Suspensionen wie Bier, mittels MF-Modulen, bei dem sich Filtrationszyklen und Reinigungszyklen abwechseln, wobei während der Filtration der Transmembrandruck laufend gemessen wird. Die Erfindung betrifft auch eine Mikro-Filtrationsanlage mit mehreren in Reihe und parallel geschalteten MF-Modulen, einer Einrichtung zur Reinigung der MF-Module und mit einer Meßeinrichtung zur Erfassung des Transmembrandrucks.

Obwohl das Filtrationsverfahren auf jegliche Flüssigkeiten anwendbar ist, steht die Klärung von Würze, Jungbier oder abgelagertem Bier im Vordergrund der Erfindung.

Die Filtration von Bier stellt in der Brauerei einen wichtigen Verfahrensschritt dar, um das Produkt den Verbrauchererwartungen gemäß zu produzieren. Hierzu wird heutzutage die Kieselgur- und Schichtenfiltration eingesetzt, die jedoch den Nachteil hat, daß bei diesem Prozeß in erhöhtem Maße zu entsorgende Filterhilfsmittel anfallen. Dies betrifft im wesentlichen die verwendete Kieselgur, deren Verbrauch weltweit bei ca. 150 000 t pro Jahr liegt. Der zu entsorgende Kieselgurschlamm hat einen Trockensubstanzgehalt von nur etwa 20 bis 25%, so daß die zu entsorgende Kieselgurschlamm-Menge mindestens das vierfache der o.g. Tonnage beträgt.

Die Entsorgung des Kieselgurschlammes verursacht große Umweltprobleme. Neben der durch den Kieselgurschlamm verursachten Instabilität der Deponien, stellen insbesondere die austretenden Sickerwässer des Kieselgurschlammes eine große Belastung der Umwelt hinsichtlich ihrer hohen BSB- und CSB-Werte dar.

Schon sehr früh suchte man nach Alternativen zu den traditionellen Klärverfahren. Als eine Alternative ist bereits die Crossflow-Technologie untersucht worden, die sich insbesondere im Weinbereich durchgesetzt hat. Diese Technologie konnte bisher im Brauereibereich noch nicht erfolgreich eingesetzt werden, was vor allem an der geringen spezifischen Flächenleistung und den analytischen Veränderungen des filtrierten Bieres im Verlauf mehrstündiger Filtrationen begründet ist.

Im Weinbereich hat man die Möglichkeit, durch Erwärmung der zu filtrierenden Weine die durchschnittliche Fluxrate bei der Crossflow-Filtration deutlich zu erhöhen, wie dies aus der DE 34 23 594 A1 bekannt ist. Werden die Produkte auf Temperaturen deutlich über 35°C erwärmt, kann die Leistung mit dem Crossflow-Verfahren auf das Doppelte angehoben werden. Diese Maßnahme ist im Bereich der Bierfiltration nicht möglich, da das Bier bei Temperaturen von -1 bis +3°C filtriert werden muß, damit kältelabile Substanzen, wie z.B. bestimmte Proteine nicht in Lösung gehen, welche später bei den Konsumenten eine Trübung des Bieres bewirken.

Die Bierfiltration gestaltet sich aufgrund der besonderen Inhaltsstoffe erheblich schwieriger als z.B. die Weinfiltration. Bier enthält neben grob dispersen Teilchen, wie z.B. Hefen, oder eventuell vorhandenen Bierschädlingen, noch kolloidale Bestandteile. Hierbei handelt es sich in erster Linie um hochmolekulare Verbindungen von Proteinen mit Kohlenhydraten, Gerbstoffen und Hopfenharzen. Als dritte Inhaltsstoffgruppe sind molekulardisperse Inhaltsstoffe zu nennen, mit einer Teilchengröße < 0,001 µm.

An das Verfahren der Bierfiltration werden nach G.E. Walla ("Die Crossflow-Mikrofiltration im Brauereibereich", Dissertation an der Technischen Universität München, Lehrstuhl für technische Mikrobiologie und Technologie der Brauerei, 1992, Seite 7) folgende Anforderungen gestellt:
1. Ausreichende chemisch-physikalische Stabilität der Filtrate,
2. keine negativen geschmacklichen Beeinträchtigungen der Produkte durch den Filtrationsprozeß,
3. biologische Stabilität der Filtrate,
4. Glanzfeinheit und blankes Filtrat; Erhaltung des CO₂-Gehaltes.

Eine weitere Anforderung betrifft das chemisch-analytische Erscheinungsbild der Filtrate. Dieses darf nur unwesentlich durch den Filtrationsprozeß beeinflußt werden.

Im Rahmen seiner Untersuchungen stellte Walla fest, daß für die Bierfiltration im Hinblick auf die Inhaltsstoffe der Filtrate ein Transmembrandruck von 1,5 bar als optimal angesehen werden kann (Dissertation Seite 66). Filtratanalysen haben gezeigt, daß der Gehalt an Stammwürze bei einem Transmembrandruck von 1,5 bar im Vergleich zu höheren oder niedrigeren Transmembrandrücken am höchsten liegt.

Ausgehend von dieser Erkenntnis wurde von Walla versucht, unter Beibehaltung eines konstanten Transmembrandruckes von 1,5 bar die Fluxraten zu erhöhen.

Da die Fluxrate durch die sich auf der Membran ausbildende Deckschicht beeinflußt wird, wurde versucht, diese durch periodische Rückspülung zu beseitigen. Dieses Verfahren hat jedoch den Nachteil, daß mit zunehmender Betriebsdauer die Fluxrate auch zu Beginn, also nach der Rückspülung mit Filtrat niedriger liegt, als beim vorhergehenden Zyklus, was dadurch zu erklären ist, daß gewisse Adsorptionseffekte eintreten, die zu einer Blockierung der Membrane in begrenztem Rahmen führen.

Darüber hinaus wurde von Walla (s. Dissertation Seite 83) festgestellt, daß trotz Anwendung einer periodischen Rückspülung insbesondere im Verlauf mehrstündiger Filtrationen mittels des Crossflow-Verfahrens die Stammwürze, der scheinbare Extrakt, die Dichte sowie die Schaumstabilität in den Filtraten abnimmt. Im Mittel verringerte sich die Stammwürze der Filtrate um durchschnittlich 0,5 Gew.-% ohne periodische Rückspülung und mit periodischer Rückspülung lag die Veränderung noch bei 0,2 Gew.-%. Der Schaumwert nahm ohne periodische Rückspülung um 21 Schaumpunkte ab und bei Anwendung der periodischen Rückspülung lag die Abnahme immerhin noch bei 6 Schaumpunkten.

Eine weitere Möglichkeit, größere Fluxraten zu erzielen, besteht in einer Steigerung der Überströmungsgeschwindigkeiten (s. Walla, Dissertation, Seite 62ff). Aus den Untersuchungen geht eindeutig hervor, daß aber auch eine hohe Überströmungsgeschwindigkeit auf Dauer keine signifikant höhere Fluxrate erbringt. Die mittlere Leistung nach etwa sechs Stunden Filtrationsdauer beträgt selbst bei einer Geschwindigkeit von 6 m/sec, nur noch 35 L/m².h. Die Ursache hierfür liegt darin, daß selbst bei Anwendung größter Überströmungsgeschwindigkeiten sich ein Aufbau der Deckschicht auf der Membranoberfläche nicht vollständig vermeiden läßt.

Darüber hinaus trägt die sich aufbauende Deckschicht durch Bildung einer sogenannten Sekundärmembran im wesentlichen auch zum Filtrationsergebnis in der Weise bei, daß die Trennschärfe der eigentlichen Membran größer wird. Dies bedeutet, daß selbst dann, wenn Membranen mit großer nomineller Porengröße verwendet werden, sich eine Deckschicht ausbildet, die weit unter der nominellen Porengröße der Membran liegt, so daß wesentliche Inhaltsstoffe aus dem Bier entfernt werden.

Hohe Strömungsgeschwindigkeiten sind aus folgenden Gründen bei der Filtration von Bier jedoch zu vermeiden. Zum einen wird durch die Überströmungspumpen eine enorme Energiemenge in das System eingeschleust, so daß sich die Biere ohne zusätzliche Kühlung sehr schnell erwärmen. Durch die mechanische Belastung der kolloidalen Substanzen im Bier, insbesondere von Glukanen, wird die Filtrierbarkeit der Biere durch das Umpumpen im Crossflow-System durch Gelbildung der β-Glucane ständig schlecher.

Aus der DE 39 36 797 C2 ist ein Verfahren zur Abtrennung von Bier aus einem beim Gärverfahren ausgeschleusten Stoffstrom bekannt, bei dem Keramikmembranen eingesetzt werden, da diese im Gegensatz zu Polymermembranen mit Heißwasser sterilisierbar sind. Diese Keramikmembranen werden in großen Zeitabständen mit einer chemischen Reinigungslösung gespült und in mehreren dazwischenliegenden Reinigungsintervallen mit Heißwasser chemikalienfrei rückgespült. Die Beinigungsintervalle werden erst dann durchgeführt, wenn durch die zunehmende Verblockung der Keramikmembrane eine Abname des Filtratflusses eingetreten ist. Dadurch besteht auch bei diesem Verfahren die Gefahr, daß eventuell wesentliche Bestandteile der zu filtrierenden Flüssigkeit durch die Deckschicht herausfiltriert werden, die das analytische Erscheinungsbild des Filtrates beeinträchtigen.

Aus der DE 39 14 956 A1 ist ein Verfahren zur Beschleunigung des Stoffaustausches eines kontinuierlichen Bioreaktors bekannt, bei dem mittels Druckmodulationen die Bildung einer Sekundärschicht auf der Filtrationsmembran verhindert wird. Die Druckänderungen werden in Abhängigkeit der über der Membran gemessenen Druckdifferenz gesteuert, wobei diese an der ausreichenden Versorgung der produzierenden Systeme mit Flüssigkeit und Nährstoffen orientiert werden muß.

In Weinwirtschaft - Technik, 1990, S. 15 - 21 wird empfohlen, immer dann, wenn die Retentattemperatur zu weit ansteigt oder die Filterleistung zu stark absinkt, die Cross-Flow-Filtration zu unterbrechen und einen Reinigungszyklus vorzunehmen.

Aufgabe der Erfindung ist ein Verfahren und eine Vorrichtung zur Filtration mittels MF-Modulen bereitzustellen, das bei geringer mechanischer und thermischer Belastung der zu filtrierenden Flüssigkeit eine hohe mittlere Fluxrate ermöglicht, wobei das Filtrat durch die Filtration in seinem analytischen Erscheinungsbild nicht beeinflußt werden soll.

Die Aufgabe wird mit einem Verfahren gemäß den Merkmalen des Patentanspruchs 1 gelöst. Gegenstand der Vorrichtung ist der Patentanspruch 14. Vorteilhafte Ausgestaltungen sind Gegenstand der Unteransprüche.

Die Erfindung geht von der Erkenntnis aus, daß es nicht sinnvoll ist, die Filtration unter Konstanthaltung des für die jeweilige Flüssigkeit optimalen Transmembrandruckes durchzuführen, um sowohl hohe Fluxraten als auch eine hervorragende Filtratqualität zu erzielen.

Dementsprechend wird jeder Filtrationszyklus mit einem niedrigen Transmembrandruck begonnen, der im Laufe des Filtrationszyklusses kontinuierlich ansteigt bis ein bestimmter vorgegebener Wert erreicht ist, der vorzugsweise mit dem für die jeweilige Flüssigkeit optimalen Transmembrandruck übereinstimmt. Für Bier wird daher vorteilhafterweise ein Wert von 1 bis 2 bar, vorzugsweise von 1,5 bar vorgegeben.

Gegen Ende des Filtrationszyklusses, wenn sich der Transmembrandruck dem vorgegebenen Transmembrandruck nähert, fällt wegen der sich unweigerlich ausbildenden Deckschicht auch die Fluxrate mehr oder weniger stark ab, die jedoch immer noch relativ hoch, in der Regel über 50% des Maximalwertes liegt.

Die Filtration wird vorzugsweise als Cross-Flow-Filtration durchgeführt. Eine statische Filtration, beispielsweise auch unter Verwendung von CMF-Modulen ist ebenfalls möglich.

Trotz der noch hohen Fluxrate wird dann ein Reinigungszyklus durchgeführt, der vorzugsweise eine alkalische Reinigung mit Anwendung von NaOH, KOH und/oder tensidhaltigem Reinigungsmittel umfaßt. Danach muß noch eine Spülung mit Wasser durchgeführt werden.

Vorzugsweise erfolgt vor der alkalischen Reinigung eine Rückspülung mit Wasser. Hierbei empfiehlt es sich, die zu filtrierende Flüssigkeit vor der Wasserrückspülung mittels CO₂ -Druckgas aus den MF-Modulen herauszudrücken. Anstelle von CO₂ kann auch N₂-Druckgas eingesetzt werden.

Um den Reinigungsprozeß zu beschleunigen, wird vorzugsweise während des Reinigungszyklus eine Überströmung der MF-Module durchgeführt.

Je nach Art der zu filtrierenden Flüssigkeit, insbesondere auch bei Bier, kann vor der Filtration mittels MF-Modulen eine Vorfiltration, beispielsweise mittels eines Separators oder eines Anschwemmfilters durchgeführt werden.

Durch den erfindungsgemäßen diskontinuierlichen Filtrationsprozeß wird die sich ausbildende Deckschicht durch die alkalische Schnellreinigung nahezu vollständig wieder entfernt, so daß während der Filtration nur der nominale Membranporendurchmesser als wirksame Trennschicht arbeitet. Die qualitätserhaltenden Bierinhaltsstoffe können so die Membran mühelos permeieren.

Wenn das Verfahren zur Filtration von Bier eingesetzt wird, wird das Filtrationsverfahren, vorzugsweise CMF-Filtrationsverfahren, nach Filtrationszeiten von 1 bis 4 Std. unterbrochen, das Bier aus der CMF-Anlage mit CO₂ herausgedrückt, die Anlage mit Wasser vorgespült und anschließend die alkalische Zwischenreinigung bei Temperaturen von 40 - 90°C durchgeführt. Nach dem alkalischen Reinigungsvorgang wird die Anlage mit Wasser gespült, welches ebenfalls mit CO₂ aus der Anlage herausgedrückt wird und anschließend wird die Anlage wieder mit Bier befüllt. Durch diese Verfahrensweise ist es möglich, daß die für die CMF-Technologie typischen hohen Fluxleistungen während der ersten Filtrationsphase zyklisch ausgenutzt werden können. Wendet man die zyklische Reinigung nach 1 bis 4 Stunden an, werden Fluxraten trotz der Filtrationsunterbrechung erzielt, welche um nahezu 100% über den bisher erzielten Fluxraten bei einem kontinuierlichen CMF-Filtrationsprozeß liegen.

Wurden im kontinuierlichen CMF-Filtrationsprozeß mit Filtrationszeiten von bis zu 8 Stunden ohne Unterbrechungen im Mittel nur 20 bis 30 L/m².h erzielt, können mit der neuartigen Verfahrensweise Fluxleistungen von bis zu 100 l/m².h erreicht werden, und zwar dies bei gleicher Zeitdauer.

Überraschend war, daß die hohen Fluxraten auch mit geringer Überströmungsgeschwindigkeit erzielt wurden. Vorzugsweise liegen die Überströmgeschwindigkeiten bei <2,5 m/s. Der Vorteil der geringen Überströmungsgeschwindigkeiten, die auch den statischen Betrieb der MF-Module mit einschließt, liegt darin, daß die zu filtrierende Flüssigkeit mechanisch und thermisch nur gering belastet wird.

Weiterhin war es überraschend, daß das analytische Erscheinungsbild der Biere sich nicht verändert hat. Besonders ein analytisches Merkmal des Bieres, nämlich die Stammwürze, wird nicht beeinflußt. Die Analysenwerte der filtrierten Biere unterscheiden sich nicht von den unfiltrierten Produkten. Auch die Schaumstabilität der Biere wird durch den diskontinuierlichen MF-Prozeß nicht negativ beeinflußt.

Die Mikrofiltrationsanlage ist dadurch gekennzeichnet, daß die MF-Module zu Filtrationsblöcken zusammengefaßt angeordnet sind, daß die Meßeinrichtung an eine Steuereinrichtung angeschlossen ist, welche jeweils bei Erreichen des vorgegebenen Transmembrandruckes, der gleich dem für die jeweils zu filtrierende Flüssigkeit hinsichtlich ihres analytischen Erscheinungsbildes optimalen Transmembrandruck gewählt ist, den Filtrationsvorgang unterbricht und einen chemischen Reinigungszyklus in Gang setzt und die an die Filtrationsblöcke angeschlossen und deart ausgebildet ist, daß mehrere Filtrationsblöcke, welche im wechselseitigen Filtrations- und Reinigungsbetrieb einen kontinuierlichen Filtrationsvorgang gewährleisten, angesteuert werden und daß die Steuereinrichtung an eine Reinigungseinrichtung angeschlossen ist, welche über eine Zuführleitung 13 mit den MF-Modulen in Verbindung steht, die einen Reinigungsbehälter zur Aufnahme eines chemischen Reinigungsmittels aufweist.

Die Vorrichtung kann mit allen gängigen Filtrations-Modultypen, insbesondere Cross-Flow-Modultypen, vorzugsweise mit Kapillar-Flachmodulen ausgestattet sein. Die Reingigungseinrichtung arbeitet mit einem vorgegebenen Reinigungsprogramm. Nach Abschluß des Reinigungszyklusses wird von der Steuereinrichtung die Filtration fortgesetzt. Zweckmäßigerweise steuert die Steuereinrichtung die entsprechenden Ventile in den Leitungen der MF-Filtrationsanlage.

Die Steuereinrichtung ist vorzugsweise zur Eingabe eines vorgegebenen Transmembrandruckes ausgebildet, so daß jeweils die für die jeweilige zu filtrierende Flüssigkeit optimalen Transmembrandrücke vorgegeben werden können.

Die MF-Module besitzen vorzugsweise Membranen mit einer nominalen Porengröße von 0,2 bis 5 µm. Als Membrane werden vorzugsweise Polymermembranen eingesetzt. Der Einsatz von Polymer- oder Metallvliesen ist ebenfalls möglich.

Beispielhafte Ausführungsformen der Erfindung werden nachfolgend anhand der Zeichnungen erläutert.

Es zeigen:
- Figur 1: eine schematische Darstellung der Filtrationsanlage,
- Figur 2: ein Diagramm, in dem die Fluxrate und der Transmembrandruck in Abhängigkeit von der Zeit für ein Bier A aufgetragen ist,
- Figur 3: ein der Figur 2 entsprechendes Diagramm für ein Bier B und
- Figur 4: ein der Figur 2 entsprechendes Diagramm für ein Bier C.

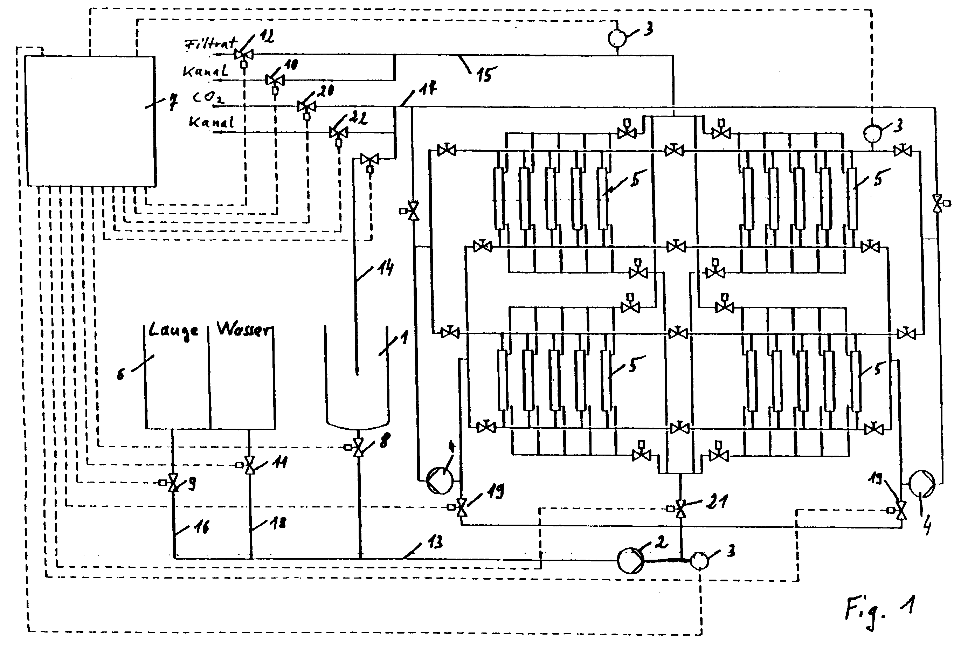

In der Figur 1 ist eine Mikrofiltrationsanlage dargestellt, die einen Vorlagetank 1 aufweist, aus dem über eine Speisepumpe 2 und zwei Umwälzpumpen 4 in der Zuführleitung 13 das zu filtrierende Bier mehreren parallel geschalteten MF-Modulen 5 zugeführt wird.

Das Konzentrat verbleibt in der Anlage oder aber wird über eine Konzentratleitung 14 abgeführt und das Filtrat wird in einer Filtratleitung 15 gesammelt, die durch ein Ventil 12 geschlossen werden kann. Durch den wahlweisen Betrieb der Umwälzpumpen 4 ist sowohl eine statische als auch eine dynamische Filtration, also eine Cross-Flow-Filtration möglich.

Die Mikrofiltrationsanlage weist auch eine Reinigungseinrichtung auf, die im wesentlichen einen Reinigungsbehälter 6 zur Aufnahme des chemischen Reinigungsmittels und des Rückspülwassers aufweist. Dieser Reinigungsbehälter 6 ist über eine Reinigungsleitung 16 sowie eine Wasserleitung 18 mit der Zuführleitung 13 verbunden. Nach dem Öffnen des Ventils 9 kann das chemische Reinigungsmittel der Speisepumpe 2 zugeführt und somit in die MF-Module 5 gefördert werden.

Ferner ist die Anlage mit Druckmeßeinrichtungen 3 ausgestattet. Die Drücke im Unfiltrat- und Filtratraum werden fortlaufend erfaßt und einer Steuereinrichtung 7 übermittelt. Diese Steuereinrichtung berechnet fortlaufend aus den Einzelwerten den Transmembrandruck und vergleicht ihn mit dem voreingestellten Wert.

Beim Erreichen des voreingestellten Transmembrandruckes unterbricht die Steuereinrichtung 7 die Filtration und setzt den Reinigungszyklus in Gang. Zu diesem Zweck ist die Steuereinrichtung mit den Ventilen 8-12, 19-22 und den Pumpen 2, 4 (Verbindung nicht dargestellt) verbunden. Wenn die Filtration unterbrochen wird, wird zurächst zur Entleerung der Anlage Ventil 8 geschlossen und Ventil 20 geöffnet.

Nach dem Leerdrücken der Anlage werden die Ventile 12, 20 und 19 geschlossen sowie die Ventile 21, 11 und 22 geöffnet. Nach dem Starten der Speisepumpe 2 werden die MF-Module 5 entgegen der Filtrationsrichtung mit Wasser gespült. Hieran schließt sich die chemische Reinigung der Anlage an. Es werden hierzu die Ventile 22, 21 und 11 geschlossen sowie die Ventile 19, 9 und 10 geöffnet.

Zum Abschluß der chemischen Reinigung wird die Reinigungsflüssigkeit nach Schließen des Ventils 9 und Öffnen von Ventil 11 aus der Anlage verdrängt. Das Wasser wird nach dem Schließen von Ventil 11 und Öffnen von Ventil 20 aus der Anlage entfernt. Nach Abschluß des Reinigungszyklusses werden die Ventile 20 und 10 geschlossen sowie die Ventile 8 und 12 wieder geöffnet.

Mittels der soeben beschriebenen Filtrationsanlage wurden die nachfolgenden Versuche durchgeführt.

Die Filtrationsanlage war mit insgesamt vier Filtrationsmodulen bestückt, die dauerhydrophilen Membranen mit einer Porengröße von 0,45 µm enthielten. Die gesamte Membranfläche betrug 20,0 m². Die Überströmungsgeschwindigkeit betrug 2,5 m/s.

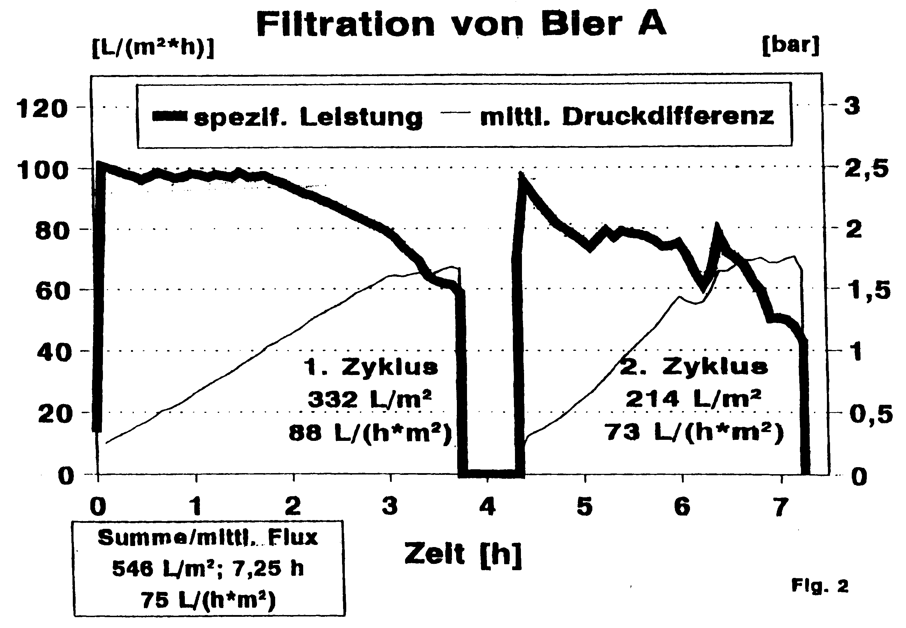

Der vorgegebene Transmembrandruck wurde auf 1,7 bar eingestellt und es wurden zwei Filtrationszyklen innerhalb von 7,5 Std. durchgeführt, die durch einen Reinigungszyklus von etwa 1/2 Stunde unterbrochen sind. Das Ergebnis ist in der Figur 2 dargestellt, in der die Fluxrate und der Transmembrandruck in Abhängigkeit der Zeit dargestellt sind.

Der Transmembrandruck beginnt bei etwa 0,25 bar und steigt dann bis zu dem vorgegebenen Transmembrandruck von etwa 1,7 bar an. Sobald dieser Transmembrandruck erreicht ist, wird der Filtrationsvorgang abgeschaltet und der Reinigungszyklus durchgeführt. Wie aus der Figur 2 zu entnehmen ist, ist die Fluxrate zu Beginn des zweiten Filtrationszyklusses gleich hoch wie zu Beginn des ersten Filtrationszyklusses. Die Fluxrate ist während des ersten Zyklusses über einen Zeitraum von 2 Stunden konstant und fällt dann erst ab, wobei am Ende des ersten Filtrationszyklusses die Fluxrate noch bei 60% des Ausgangswertes liegt. Beim zweiten Filtrationszyklus fällt die Fluxrate bereits nach einer Stunde ab, wird dann aber über einen Zeitraum von etwa 1,5 Stunden konstant gehalten. Die mittlere Fluxrate liegt bei diesem Beispiel bei 75 L/m².h.

Die Analysenwerte sind in der nachfolgenden Tabelle zusammengestellt.

**Tabelle**

| | I | II | III | IV |
|---|---|---|---|---|
| Farbe EBC | 6,0 | 6,1 | 6,0 | 5,7 |
| pH | 4,20 | 4,21 | 4,19 | 4,21 |
| Bitterwert EBC | 32 | 32 | 32 | 32 |
| FDM mg/l | 88 | 101 | 92 | 101 |
| Extrakt scheinbar % | 1,52 | 1,52 | 1,52 | 1,51 |
| Extrakt wirklich % | 3,35 | 3,35 | 3,37 | 3,35 |
| Alkohol Gew.-% | 4,00 | 4,00 | 4,07 | 4,04 |
| Alkohol Vol.-% | 5,08 | 5,08 | 5,18 | 5,13 |
| Stammwürze % | 11,18 | 11,19 | 11,30 | 11,17 |
| Vergärungsgrad scheinb. % | 86,41 | 86,42 | 86,55 | 86,49 |
| Vergärungsgrad wirklich % | 70,07 | 70,06 | 70,17 | 70,11 |
| Brennwert kcal/100 g | 41 | 41 | 42 | 42 |
| Brennwert kJ/100 g | 173 | 173 | 176 | 174 |
| Schaum nach NIBEM sec | 290 | 310 | 315 | 270 |
| Schwefeldioxid mg/l | 7 | 8 | 8 | 8 |
| I Zentrifuge Auslauf II Cross-Flow-Auslauf III Cross-Flow-Auslauf (2. Filtrationszyklus) IV Stand der Technik/Auslauf-Schichten | | | | |

Da zusätzlich eine Vorfiltration mittels einer Zentrifuge (in Figur 1 nicht dargestellt) durchgeführt wurde, sind in der Spalte I die Analysenwerte am Auslauf der Zentrifuge aufgeführt, die somit die Werte des Unfiltrates für die CMF-Filtration darstellen. In der Spalte II sind die Analysenwerte nach dem ersten Filtrationszyklus und in Spalte III nach dem zweiten Filtrationszyklus aufgeführt. Zum Vergleich sind in Spalte IV die Analysenwerte nach der herkömmlichen Filtration mit einem Schichtenfilter zusammengestellt.

Aus dem Vergleich der Zahlenwerte ist zu erkennen, daß z.B. die Farbe EBC besser ist, als nach der Filtration gemäß des Standes der Technik. Der Gehalt der Stammwürze hat sich gegenüber dem Gehalt im Unfiltrat nicht verändert. Die Schaumwerte liegen gegenüber der Spalte IV deutlich höher und sind ebenfalls mit dem Wert des Unfiltrates vergleichbar.

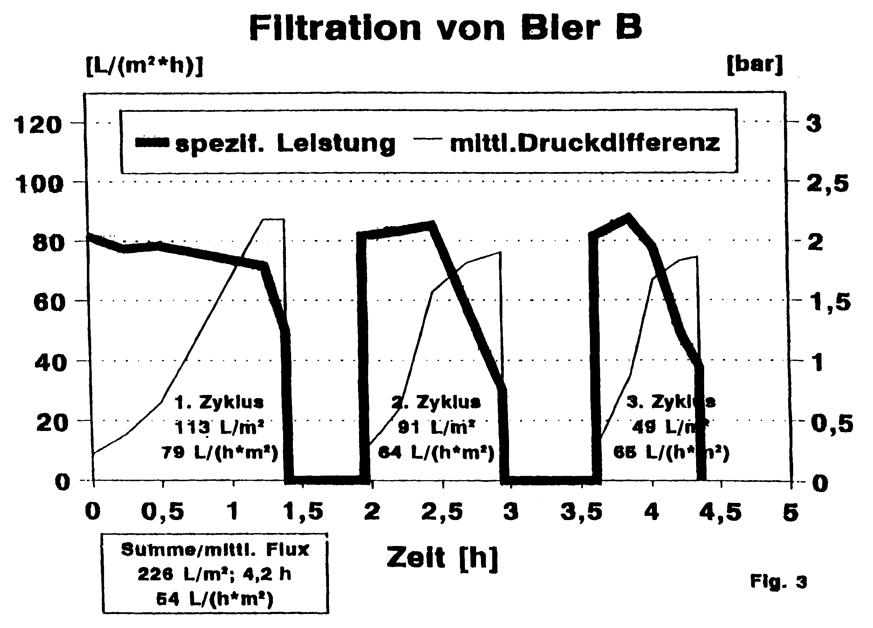

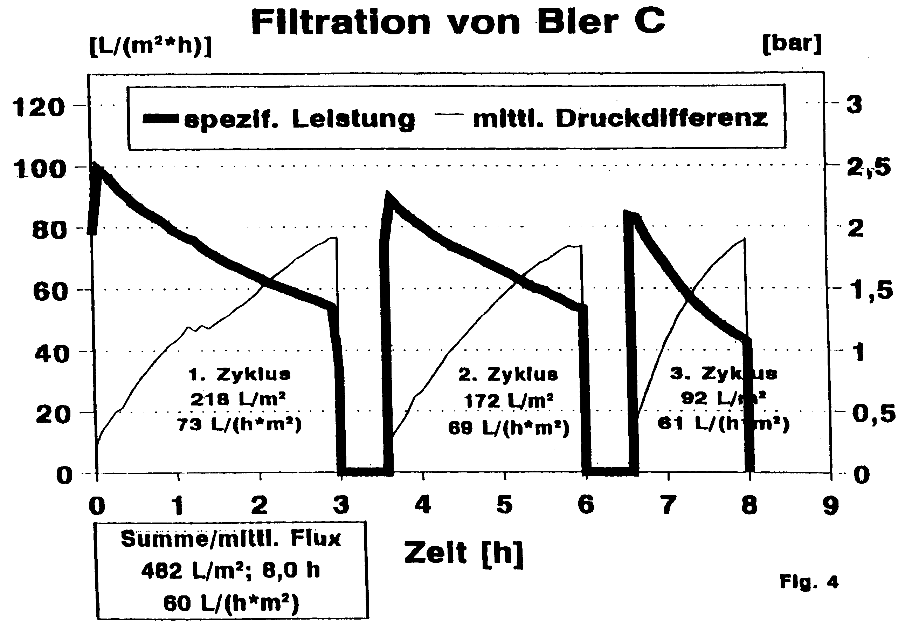

In der Figur 3 ist ein Diagramm mit drei Filtrationszyklen dargestellt, wobei die Filtration mit einem anderen Biertyp (Pils-Bier) durchgeführt wurde. Hier lag die mittlere Fluxrate bei 54 L/m².h. Die Analysenwerte nach den Filtrationszyklen waren mit den aus der Tabelle vergleichbar. Gleiches gilt auch für die Figur 4, aus der die Fluxraten und die Transmembrandrücke bei einem dritten Bier Bierfiltrationsversuch dargestellt sind.

### Bezugszeichen:

- 1: Unfiltrat
- 2: Speisepumpe
- 3: Meßeinrichtung
- 4: Umwälzpumpe
- 5: MF-Module
- 6: Reinigungsbehälter
- 7: Steuereinrichtung
- 8: Ventil Unfiltratzuführleitung
- 9: Ventil Reinigungsflüssigkeit
- 10: Ventil Ablauf Filtratseite
- 11: Ventil Wasser
- 12: Ventilfiltrat
- 13: Zuführleitung
- 14: Konzentratleitung
- 15: Filtratleitung
- 16: Reinigungsleitung
- 17: Druckgasleitung
- 18: Wasserleitung
- 19: Ventil Zuführ Konzentratraum
- 20: Ventil Druckgas
- 21: Ventil Zufuhr Filtratraum
- 22: Ventil Ablauf Konzentratseite

## Patentansprüche

1. Verfahren zur Filtration von Flüssigkeiten, insbesondere von heterodispersen Suspensionen, wie Bier, mittels MF-Modulen, bei dem sich Filtrationszyklen und Reinigungszyklen abwechseln, wobei während der Filtration der Transmembrandruck laufend gemessen wird,
dadurch gekennzeichnet,
daß der Reinigungszyklus immer dann durchgeführt wird, wenn der Transmembrandruck einen vorgegebenen Wert übersteigt, der gleich dem für die jeweils zu filtrierende Flüssigkeit hinsichtlich ihres analytischen Erscheinungsbildes optimalen Transmembrandruck gewählt wird.

2. Verfahren nach Anspruch 1, dadurch gekennzeichnet, daß der vorgegebene Transmembrandruck so gewählt wird, daß bei Erreichen des vorgegebenen Transmembrandruckes die Fluxrate noch oberhalb ihres halben Maximalwertes liegt.

3. Verfahren zur Filtration von Bier nach einem der Ansprüche 1 oder 2, dadurch gekennzeichnet, daß der vorgegebene mittlere Transmembrandruck auf 1 bis 2 bar eingestellt wird.

4. Verfahren nach Anspruch 3, dadurch gekennzeichnet, daß der vorgegebene Wert des Transmembrandruckes auf 1,5 bar eingestellt wird.

5. Verfahren nach einem der Ansprüche 1 bis 4, dadurch gekennzeichnet, daß die Fluxrate zumindest während eines Zeitabschnittes des jeweiligen Filtrationszyklus konstant gehalten wird.

6. Verfahren nach einem der Ansprüche 1 bis 5, dadurch gekennzeichnet, daß der Reinigungszyklus eine alkalische Reinigung mit Anwendung von NaOH, KOH und/oder tensidhaltigem Reinigungsmittel umfaßt, an den sich eine Spülung mit Wasser anschließt.

7. Verfahren nach Anspruch 6, dadurch gekennzeichnet, daß vor der alkalischen Reinigung eine Wasserrückspülung erfolgt.

8. Verfahren nach Anspruch 7, dadurch gekennzeichnet, daß die zu filtrierende Flüssigkeit vor der Wasserrückspülung mittels CO₂- oder N₂- Druckgas aus den MF-Modulen herausgedrückt wird.

9. Verfahren nach einem der Ansprüche 1 bis 8, dadurch gekennzeichnet, daß während des Reinigungszyklusses eine Überstromung der MF-Module durchgeführt wird.

10. Verfahren nach einem der Ansprüche 1 bis 9, dadurch gekennzeichnet, daß vor der Filtration mittels MF-Modulen eine Vorfiltration durchgeführt wird.

11. Verfahren nach Anspruch 10, dadurch gekennzeichnet, daß die Vorfiltration mittels eines Separators oder eines Anchwemmfilters durchgeführt wird.

12. Verfahren nach einem der Ansprüche 1 bis 11, dadurch gekennzeichnet, daß eine Cross-Flow-Filtration durchgeführt wird.

13. Verfahren nach einem der Ansprüche 1 bis 11, dadurch gekennzeichnet, daß die MF-Module wahrend der Filtration statisch filtrieren.

14. Mikro-Filtrationsanlage mit mehreren in Reihe und parallel geschalteten MF-Modulen, einer Einrichtung zur Reinigung der MF-Module und mit einer Meßeinrichtung zur Erfassung des Transmembrandruckes, wobei
die MF-Module zu Filtrationsblöcken zusammengefaßt angeordnet sind,
die Meßeinrichtung (3) an eine Steuereinrichtung (7) angeschlossen ist, welche jeweils bei Erreichen des vorgegebenen Transmembrandruckes, der gleich dem für die jeweils zu filtrierende Flüssigkeit hinsichtlich ihres analytischen Erscheinungsbildes optimalen Transmembrandruck gewählt ist, den Filtrationsvorgang unterbricht und einen chemischen Reinigungszyklus in Gang setzt und die an die Filtrationsblöcke angeschlossen und derart ausgebildet ist, daß mehrere Filtrationsblöcke, welche im wechselseitigen Filtrations- und Reinigungsbetrieb einen kontinuierlichen Filtrationsvorgang gewährleisten, angesteuert werden und
die Steuereinrichtung (7) an eine Reinigungseinrichtung angeschlossen ist, welche über eine Zuführleitung (13) mit den MF-Modulen (5) in Verbindung steht, die einen Reinigungsbehälter (6) zur Aufnahme eines chemischen Reinigungsmittels aufweist.

15. Anlage nach Anspruch 14, dadurch gekennzeichnet, daß die Steuereinrichtung (7) zur Eingabe eines vorgegebenen Transmembrandrucks ausgebildet ist.

16. Anlage nach einem der Ansprüche 14 oder 15, dadurch gekennzeichnet, daß die MF-Module (5) Membrane mit einer Porengröße von 0,2 bis 5 µm aufweisen.

17. Anlage nach einem der Ansprüche 14 bis 16, dadurch gekennzeichnet, daß die MF-Module (5) Polymermembrane, Polymervliese oder Metallvliese aufweisen.

18. Anlage nach einem der Ansprüche 14 bis 17, dadurch gekennzeichnet, daß die MF-Module (5) Flach-, Hohlfaser-, Kapillar-, Rohr- oder Spiralwickelmodule sind.

## Claims

1. Process for filtering fluids, especially heterodispersed suspensions such as beer, by means of MF modules, in which filtration cycles and cleaning cycles alternate, and in which the transdiaphragm pressure is measured continuously during filtration,
characterized in that,
the cleaning cycle is performed whenever the trans-diaphragm pressure exceeds a predetermined value which is selected so as to be equal to the optimum trans-diaphragm pressure for the particular fluid to be filtered with regard to its analytical characteristics.

2. Process according to Claim 1, characterized in that the predetermined trans-diaphragm pressure selected is such that, when the predetermined trans-diaphragm pressure is reached, the flux rate is still greater than half of its maximum value.

3. Process for filtering beer according to Claim 1 or Claim 2, characterized in that the predetermined mean trans-diaphragm pressure is set at from 1 to 2 bars.

4. Process according to Claim 3, characterized in that the predetermined value of the transdiaphragm pressure is set at 1.5 bars.

5. Process according to any one of Claims 1 to 4, characterized in that the flux rate is kept constant at least during a period of each filtration cycle.

6. Process according to any one of Claims 1 to 5, characterized in that the cleaning cycle includes alkaline cleaning with the use of NaOH, KOH and/or a cleaning agent with a surfactant content, followed by rinsing with water.

7. Process according to Claim 6, characterized in that backwashing with water takes place before the alkaline cleaning.

8. Process according to Claim 7, characterized in that the fluid to be filtered is forced out of the MF modules by means of compressed CO₂ or N₂ gas before the backwashing with water.

9. Process according to any one of Claims 1 to 8, characterized in that flooding of the MF module is performed during the cleaning cycle.

10. Process according to any one of Claims 1 to 9, characterized in that a preliminary filtration is performed before the filtration by means of MF modules.

11. Process according to Claim 10, characterized in that the preliminary filtration is performed by means of a separator or a pre-coated filter.

12. Process according to any one of Claims 1 to 11, characterized in that a cross-flow filtration is performed.

13. Process according to any one of Claims 1 to 11, characterized in that the MF modules filter statically during the filtration.

14. Micro-filtration apparatus with a plurality of MF modules arranged in series and in parallel, with a device for cleaning the MF modules, and with a measurement device for the continuous detection of the trans-diaphragm pressure, in which
the MF modules are combined in filtration blocks,
the measurement device (3) is connected to a control device (7) which interrupts the filtration process and initiates a chemical cleaning cycle whenever the predetermined trans-diaphragm pressure is reached, this pressure being selected so as to be equal to the optimum trans-diaphragm pressure for the fluid to be filtered at the time in question with regard to its analytical characteristics, and which is connected to the filtration blocks and is designed in a manner such that a plurality of filtration blocks which ensures a continuous filtration process in the alternating filtration and cleaning operation is controlled, and
the control device (7) is connected to a cleaning device which is connected to the MF modules (5) by means of a feed line (13) and which includes a cleaning tank (6) for holding a chemical cleaning agent.

15. Apparatus according to Claim 14, characterized in that the control device (7) is designed for the input of a predetermined trans-diaphragm pressure.

16. Apparatus according to Claim 14 or Claim 15, characterized in that the MF-module (5) comprises diaphragms with a pore size of from 0.2 to 5 µm.

17. Apparatus according to any one of Claims 14 to 16, characterized in that the MF modules (5) comprise polymer diaphragms, polymer wool or metal wool.

18. Apparatus according to any one of Claims 14 to 17, characterized in that the MF modules (5) are flat, hollow-fibre, capillary, tube or spiral-coil modules.

## Revendications

1. Procédé pour la filtration de liquides, en particulier de suspensions hétérodispersées telles que la bière, au moyen de modules de microfiltration, dans lequel on alterne des cycles de filtration et des cycles de nettoyage, la pression transmembranaire étant mesurée en continu au cours de la filtration,
caractérisé
en ce qu'on déclenche le cycle de nettoyage chaque fois que la pression transmembranaire dépasse une valeur prédéfinie qui est sélectionnée pour être égale à la pression transmembranaire optimale pour le liquide respectif à filtrer en fonction de ses caractéristiques analytiques.

2. Procédé selon la revendication 1, caractérisé en ce qu'on sélectionne la pression transmembranaire prédéfinie de telle sorte que, lorsque la pression transmembranaire prédéfinie est atteinte, le débit du flux se situe encore au-dessus de sa demi-valeur maximale.

3. Procédé pour la filtration de bière selon l'une quelconque des revendications 1 ou 2, caractérisé en ce qu'on règle la pression transmembranaire moyenne prédéfinie à une valeur de 1 à 2 bar.

4. Procédé selon la revendication 3, caractérisé en ce qu'on règle la valeur prédéfinie de la pression transmembranaire à 1,5 bar.

5. Procédé selon l'une quelconque des revendications 1 à 4, caractérisé en ce qu'on maintient constant le débit du flux au moins pendant une partie du temps du cycle de filtration respectif.

6. Procédé selon l'une quelconque des revendications 1 à 5, caractérisé en ce que le cycle de nettoyage comprend un nettoyage alcalin avec application de NaOH, de KOH et/ou d'un détergent tensioactif, auquel se raccorde un rinçage avec de l'eau.

7. Procédé selon la revendication 6, caractérisé en ce qu'on procède à un lavage par inversion de courant avec de l'eau avant de procéder au nettoyage alcalin.

8. Procédé selon la revendication 7, caractérisé en ce qu'on presse le liquide à filtrer, avant le lavage par inversion de courant avec de l'eau, au moyen d'un gaz de pression de type CO₂ ou N₂ hors des modules de microfiltration.

9. Procédé selon l'une quelconque des revendications 1 à 8, caractérisé en ce qu'au cours du cycle de nettoyage, on procède à une inondation des modules de microfiltration.

10. Procédé selon l'une quelconque des revendications 1 à 9, caractérisé en ce qu'avant la filtration, on procède à une préfiltration au moyen de modules de microfiltration.

11. Procédé selon la revendication 10, caractérisé en ce qu'on effectue la préfiltration au moyen d'un séparateur ou d'un filtre à précouches.

12. Procédé selon l'une quelconque des revendications 1 à 11, caractérisé en ce qu'on effectue une filtration à flux croisé.

13. Procédé selon l'une quelconque des revendications 1 à 11, caractérisé en ce que les modules de microfiltration mettent en oeuvre une filtration statique au cours de la filtration.

14. Installation de microfiltration comprenant plusieurs modules de microfiltration montés en série et en parallèle, un dispositif pour le nettoyage des modules de microfiltration et un mécanisme de mesure pour l'enregistrement en continu de la pression transmembranaire, dans laquelle
les modules de microfiltration sont disposés en étant rassemblés en blocs de filtration,
le mécanisme de mesure (3) est raccordé à un mécanisme de commande (7) qui interrompt le processus de filtration chaque fois que l'on atteint la pression transmembranaire prédéfinie qui est sélectionnée pour être égale à la pression transmembranaire optimale pour le liquide respectif à filtrer en fonction de ses caractéristiques analytiques, et on déclenche un cycle de nettoyage chimique, le mécanisme de mesure étant raccordé aux blocs de filtration et réalisé de telle sorte que l'on commande plusieurs blocs de filtration qui garantissent un processus de filtration en continu dans un fonctionnement alternatif de filtration et de nettoyage, et
le mécanisme de commande (7) est raccordé à un mécanisme de nettoyage qui est relié aux modules (5) de microfiltration, via un conduit d'alimentation (13) qui présente un récipient de nettoyage (6) pour la réception d'un détergent chimique.

15. Procédé selon la revendication 14, caractérisé en ce que le mécanisme de commande (7) est réalisé pour l'introduction d'une pression transmembranaire prédéfinie.

16. Installation selon l'une quelconque des revendications 14 ou 15, caractérisée en ce que les modules de microfiltration (5) présentent des membranes possédant une grosseur des pores de 0,2 à 5 µm.

17. Installation selon l'une quelconque des revendications 14 à 16, caractérisée en ce que les modules de microfiltration (5) présentent des membranes polymères, des non-tissés polymères ou des non-tissés métalliques.

18. Installation selon l'une quelconque des revendications 14 à 17, caractérisée en ce que les modules de microfiltration (5) sont des modules plats, des modules à fibres creuses, des modules capillaires, des modules tubulaires ou des modules enroulés en spirale.
